Europäisches Patentamt

European Patent Office

Office européen des brevets

(19)

(11) Veröffentlichungsnummer: **0 265 628**
**B1**

(12) # EUROPÄISCHE PATENTSCHRIFT

(45) Veröffentlichungstag der Patentschrift:
**15.03.89**

(51) Int. Cl.⁴: **B28B 11/16**

(21) Anmeldenummer: **87112620.7**

(22) Anmeldetag: **29.08.87**

(54) **Abschneidevorrichtung für plastische Stränge.**

(30) Priorität: **25.10.86  DE 3636375**

(43) Veröffentlichungstag der Anmeldung:
**04.05.88 Patentblatt 88/18**

(45) Bekanntmachung des Hinweises auf die Patenterteilung:
**15.03.89 Patentblatt 89/11**

(84) Benannte Vertragsstaaten:
**AT BE CH FR GB IT LI NL**

(56) Entgegenhaltungen:
**EP-A- 0 202 010**
**FR-E- 47 663**
**US-A- 4 316 866**

(73) Patentinhaber: **Hans Lingl Anlagenbau und Verfahrenstechnik GmbH & Co. KG, Albrecht-Berblinger-Strasse 6, D-7910 Neu-Ulm(DE)**

(72) Erfinder: **Koch, Rainer, Herbartstrasse 12, D-7913 Senden(DE)**

ACTORUM AG

## Beschreibung

Die Erfindung betrifft eine Abschneidevorrichtung für plastische Stränge gemäß dem Oberbegriff des Anspruches 1.

Bei plastischen Strängen, insbesondere bei solchen für die Herstellung von Katalysatoren, ist es wesentlich, den Schneidedraht so zu führen, daß möglichst saubere Schnittkanten entstehen und die Stege nicht zerdrückt werden. Ferner müssen verschlissene Drähte erneuerbar sein.

Die gebräuchlichsten Abschneidevorrichtungen teilen den Strang entweder mit horizontal gespannten Drähten, die vertikal durch den Strang geführt werden, oder mit vertikal gespannten Drähten, die horizontal geführt werden.

Aus der DE-AS 2 100 819 ist eine Abschneidevorrichtung der eingangs genannten Art bekannt, bei der die Schneidedrähte sternförmig zwischen einem kreisringförmigen Drahtführungskörper und dessen Drehachse angeordnet sind. Der Drahtführungskörper umschließt den Strang, wobei die Auflage für den Strang seitlich neben der Drehachse angeordnet ist. Zur Reinigung der Schneidedrähte sind exzentrisch zur Drehachse kreisförmige Führungen vorgesehen, die ebenfalls den Strang umgeben. In den Führungen laufen Glieder mit Abstreiflippen um, die entlang den Schneidedrähten hin- und herbewegt werden, um diese sauber zu halten.

Auch bei dieser Abschneidevorrichtung führt der Schneidedraht an der Kontaktstelle eine gänzlich bzw. nahezu gänzlich vertikale Bewegungsbahn gegen die Schnittfläche aus. Dies ergibt an der Schnittstelle einen vertikalen Druck, der zur Verdrückung des plastischen Materials und zu einem rascheren Verschleiß der Schneidedrähte führt.

Ferner hat diese Vorrichtung erhebliche Ausmaße. Dies liegt daran, daß der Durchmesser des kreisringförmigen Drahtführungskörpers unverhältnismäßig groß ist, weil zum einen die Befestigung der Drähte an der Drehachse ausreichend freien Platz für den Durchgang des Stranges erfordert, zum anderen der kreisringförmige Drahtführungskörper die Kreisführungen für die Reinigungsglieder umschließen muß.

Der Erfindung liegt die Aufgabe zugrunde, eine Abschneidevorrichtung der eingangs genannten Art zu schaffen, bei der der vertikale Druck des Schneidedrahtes vermindert und zugleich die Abmessungen der Vorrichtung möglichst klein gehalten werden können.

Diese Aufgabe wird durch die im kennzeichnenden Teil des Anspruchs 1 angegebene Ausbildung gelöst.

Ein Vorteil der Vorrichtung nach der Erfindung besteht darin, daß die Bewegungsbahn des Schneidedrahtes stets eine vertikale und eine in Längsrichtung des Drahtes verlaufende Komponente hat, so daß der Schneidedraht eine sägeartige Schnittbewegung macht. Durch das sägeartige Schneiden wird ein Verdrücken des Materials an der Schnittstelle vermieden u. zugleich der Schneidedraht weniger beansprucht.

Ein weiterer Vorteil ist darin zu sehen, daß der Strang zentral den kreisringförmigen Drahtführungskörper durchlaufen kann, so daß dessen Durchmesser nur auf den Querschnitt des Stranges abgestimmt werden muß.

Weitere Merkmale der Erfindung sind den Ansprüchen 2 bis 7 zu entnehmen.

Mit der Ausbildung gemäß dem Anspruch 2 wird erreicht, daß der Draht im Schnittbereich kontinuierlich erneuert wird, also ein sofortiges Auswechseln des ganzen Drahtes bei Auftreten von Verschleißstellen entfällt.

Der Anspruch 3 gibt eine denkbar einfache Ausführung der sägeartigen Schnittbewegung des Schneidedrahtes wieder.

Der Anspruch 6 enthält eine Maßnahme, die das ständige Sauberhalten des Schneidedrahtes mit geringst möglichem baulichen Aufwand erlaubt.

Ausführungsbeispiele der Erfindung sind in der Zeichnung dargestellt und im folgenden näher beschrieben. Es zeigen:

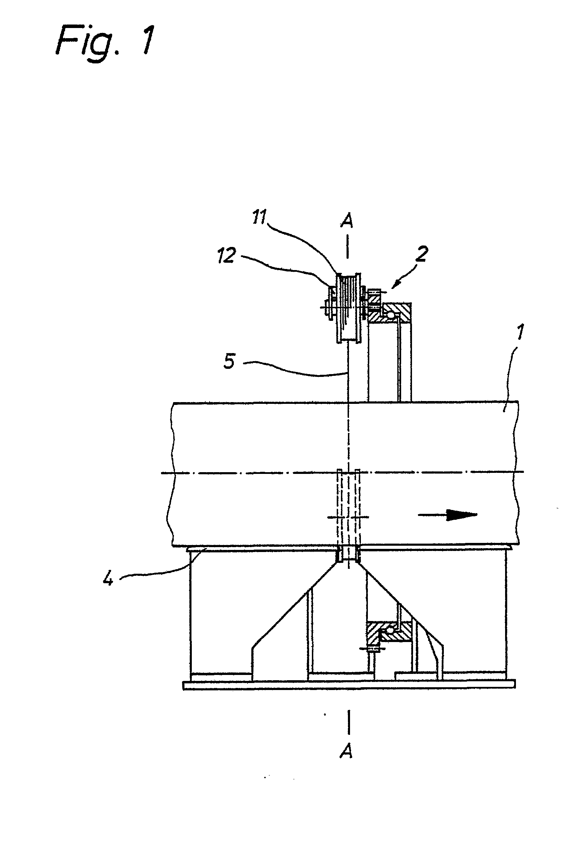

Fig. 1 die Abschneidevorrichtung quer zum Stranglauf,

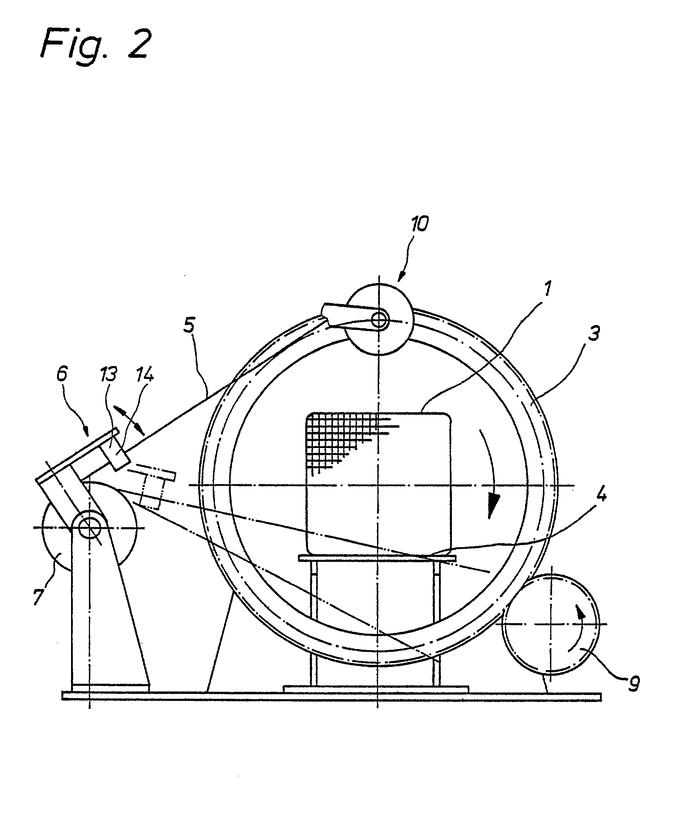

Fig. 2 dieselbe Vorrichtung in Stranglaufrichtung,

Fig. 3 eine mögliche Variante der Drahtführung ohne kontinuierliche Seilerneuerung.

Die Abschneidevorrichtung 2 ist auf einem Schlitten (nicht gezeigt) gelagert, der zum Schneiden des Stranges 1 entweder synchron mit diesem bewegt werden oder stillstehen kann, und mit einem kreisringförmigen Drahtführungskörper 3 ausgerüstet, dessen Drehung durch einen außerhalb gelegenen Antrieb erfolgt.

Der Strang 1 oder ein Strangstück durchläuft den Drahtführungskörper 3 etwa in dessen Mitte und wird auf einem geschlitzten Schneidetisch 4 transportiert. Der Schneidedraht 5 ist einerseits an einer Drahtbefestigung 10 am kreisringförmigen Drahtführungskörper 3 angebracht und andererseits an einem feststehenden Führungskörper 6 gelagert, der außerhalb des kreisringförmigen Drahtführungskörpers 3 zur Mitte der Stranghöhe ausgerichtet angeordnet ist. Der feststehende Führungskörper 6 weist eine Spule 7 auf, auf die bzw. von der der Schneidedraht auf- bzw. abwickelbar ist und unter gleichmäßiger Spannung gehalten wird.

Es können auch mehrere Schnittebenen A mit je einem Schneidedraht 5 parallel zum gleichzeitigen Abtrennen mehrerer Formlinge vorgesehen werden, wozu dann an den beiden Führungskörpern eine entsprechende Anzahl von Spulen vorzusehen ist.

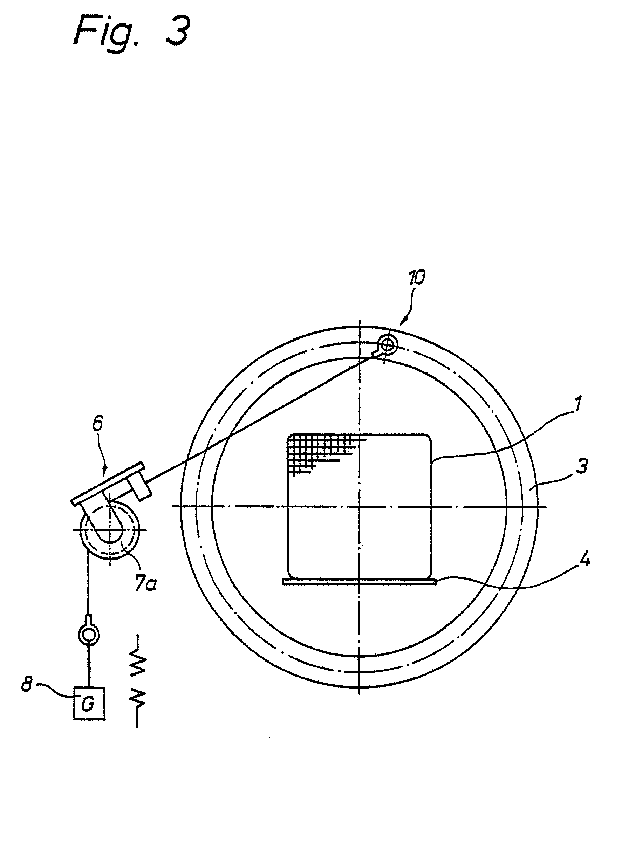

In Fig. 3 ist eine vereinfachte Ausführung für die sägeartige Schnittbewegung dargestellt, bei der am feststehenden Führungskörper 6 der Draht über eine Umlenkrolle 7a geführt und durch ein Gewicht 8 unter gleichbleibender Spannung gehalten wird. Auch hier ist am feststehenden Führungskörper 6 eine Führungs- und Reinigungsleiste für den Draht 5 angelenkt. An der Drahtbefestigung 10 des kreisringförmigen Drahtführungskörpers 3 ist der Draht angelenkt.

## Patentansprüche

1. Abschneidevorrichtung für plastische Stränge mit einem drehbar gelagerten, eine Lagerstelle (10) für mindestens einen Schneidedraht (5) enthaltenden kreisförmigen Drahtführungskörper (3), der einen geschlitzten Schneidetisch (4) mit dem darauf liegenden Strang umschließt, sowie mit einer der Bewegung des Schneidedrahtes folgenden Einrichtung zum stetigen Reinigen desselben während eines Schneidevorganges, dadurch gekennzeichnet, daß außerhalb des kreisringförmigen Drahtführungskörpers (3) ein feststehender Führungskörper (6) angeordnet ist, von dem bzw. auf der Schneidedraht (5) während der Kreisbewegung seiner Lagerstelle (10) am drehbaren Drahtführungskörper (3) ab- und aufgerollt sowie mittels einer Zugeinrichtung (7 bzw. 8) in gleichbleibender Spannung gehalten wird.

2. Abschneidevorrichtung nach Anspruch 1, dadurch gekennzeichnet, daß die Lagerstellen des Schneidedrahtes (5) am feststehenden Führungskörper (6) und am kreisringförmigen Drahtführungskörper (3) jeweils als Spulen (7 bzw. 11) ausgeführt sind, von welchem bzw. auf welche der Schneidedraht (5) ab- bzw. aufwickelbar ist, und daß die Spule (11) des kreisringförmigen Führungskörpers (3) während jeder Kreisbewegung mittels eines Schaltwerkes, zum Beispiel eines Klinkenantriebes, so fortschaltbar ist, daß der Schneidedraht auf ihr unter ständiger Erneuerung im Schnittbereich aufgewickelt wird.

3. Abschneidevorrichtung nach Anspruch 1, dadurch gekennzeichnet, daß der feststehende Führungskörper (6) eine Umlenkrolle (7a) aufweist und der über diese geführte Schneidedraht durch ein Gegengewicht (8) gespannt wird.

4. Abschneidevorrichtung nach Anspruch 1 oder 2, dadurch gekennzeichnet, daß der kreisringförmige Drahtführungskörper (3) als Zahnrad ausgeführt ist, das mit einem antreibbaren Ritzel (9) kämmt.

5. Abschneidevorrichtung nach einem der Ansprüche 1 bis 4, dadurch gekennzeichnet, daß der plastische Strang zentral durch den kreisringförmigen Drahtführungskörper (3) geleitet wird und der Schneidetisch (4) eine halbe Stranghöhe unterhalb der Mittelebene des Drahtführungskörpers (3) angebracht ist.

6. Abschneidevorrichtung nach einem der Ansprüche 1 bis 5, dadurch gekennzeichnet, daß am feststehenden Führungskörper (6) eine Putzleiste (13, 14) zum ständigen Reinigen des Schneidedrahtes (5) angelenkt ist.

7. Abschneidevorrichtung nach einem der Ansprüche 2 bis 6, dadurch gekennzeichnet, daß die Umlenkstelle der Spule (7) bzw. der Umlenkrolle (7a) des feststehenden Führungskörpers (6) etwa in Höhe der Strangmitte liegt.

## Claims

1. A cutting device for columns of plastic material comprising a rotatably mounted circular wire guiding element (3) containing a mounting point (10) for at least one cutting wire (5) and enclosing a slotted cutting table (4) with the column resting thereon and a device following the movement of the cutting wire for continuous cleaning of the same during a cutting operation, characterized in that a stationary guiding element (6) is disposed outside the circular wire guiding element (3) from which and on to which the cutting wire (5) is unwound and wound respectively during the circular movement performed by its mounting point (10) on the rotatable wire guiding element (3) while being kept under constant tension by means of a pulling device (7 or 8).

2. A cutting device as claimed in Claim 1, characterized in that the mounting points of the cutting wire (5) on the stationary guiding element (6) and on the circular wire guiding element (3) take the form of reels (7 and 11) from which and on to which the cutting wire (5) may be unwound and wound respectively and that the reel (11) of the circular guiding element (3) can be indexed during each circular movement by means of a ratchet mechanism, for example, in such a manner that when the cutting wire is wound on to the said reel it is constantly renewed in the cutting zone.

3. A cutting device as claimed in Claim 1, characterized in that the stationary guiding element (6) is provided with a pulley (7a) and that the cutting wire led over this pulley is tensioned by a counterweight (8).

4. A cutting device as claimed in Claim 1 or 2, characterized in that the circular wire guiding element (3) takes the form of a gear in mesh with a driving pinion (9).

5. A cutting device as claimed in any one of Claims 1 to 4, characterized in that the column of plastic material is centrally passed through the circular wire guiding element (3) and that the cutting table (4) is disposed at a distance corresponding to one half of the column height below the central plane of the wire guiding element (3).

6. A cutting device as claimed in any one of Claims 1 to 5, characterized in that a cleaning device (13, 15) for constantly cleaning the cutting wire (5) is hinged to the stationary guiding element (6).

7. A cutting device as claimed in any one of Claims 2 to 6, characterized in that the point at which the cutting wire is deflected on the reel (7) or the pulley (7a) of the stationary guiding element (6) is disposed approximately at the height of the column centre.

## Revendications

1. Dispositif de coupe pour boudins plastiques avec un corps de guidage pour fils (3) pivotant, circulaire et comportant un point d'appui (10) destiné au minimum à un fil de coupe (5), lequel corps enserre une table de coupe fendue (4) sur laquelle se trouve le boudin, ainsi qu'avec un dispositif suivant le mouvement du fil de coupe et destiné au nettoyage constant de celui-ci durant le processus de coupe, caractérisé en ce qu'il est disposé, à l'extérieur du corps de guidage circulaire pour fils (3), un corps de guidage fixe (6) à partir duquel ou sur lequel le fil de coupe (5) se déroule ou s'enroule pendant le mouvement circulaire de son point d'appui (10) sur le corps de guidage pivotant pour fils (3) et qui est maintenu en état de tension constante à l'aide d'un dispositif de traction (7 ou 8).

2. Dispositif de coupe selon la revendication no 1, caractérisé en ce que les points d'appui du fil de coupe (5), situés sur le corps de guidage fixe (6) et sur le corps de guidage circulaire pour fils (3), sont chacun conçus sous forme de bobines (7 ou 11), à partir duquel ou sur lesquels le fil de coupe (5) peut être enroulé ou déroulé, et en ce que la bobine (11) du corps de guidage circulaire (3) peut, durant chaque mouvement circulaire, avancer à l'aide d'un mécanisme d'avance, d'un entraînement à cliquet par exemple, de telle manière que le fil de coupe puisse s'enrouler sur celle-ci, avec renouvellement constant, dans la zone de coupe.

3. Dispositif de coupe selon la revendication no 1, caractérisé en ce que le corps de guidage fixe (6) présente une poulie de guidage (7a) et en ce que le fil de coupe guidé par celle-ci est tendu par un contre-poids (8).

4. Dispositif de coupe selon la revendication no 1 ou 2, caractérisé en ce que le corps de guidage circulaire pour fils (3) est conçu sous forme de roue dentée qui s'engrène dans un pignon entraîné (9).

5. Dispositif de coupe selon l'une des revendications no 1 à 4, caractérisé en ce que le boudin plastique est guidé dans l'axe par le corps de guidage circulaire pour fils (3) et en ce que la table de coupe (4) est disposée à une moitié de hauteur de boudin au-dessous du plan médian du corps de guidage pour fils (3).

6. Dispositif de coupe selon l'une des revendications no 1 à 5, caractérisé en ce qu'un listel à nettoyer (13, 14) est articulé au corps de guidage fixe (6) pour le nettoyage continu du fil de coupe (5).

7. Dispositif de coupe selon l'une des revendications no 2 à 6, caractérisé en ce que le point de renvoi de la bobine (7) ou de la poulie de guidage (7a) du corps de guidage fixe (6) se trouve à peu près à la hauteur du milieu du boudin.

*Fig. 1*

*Fig. 2*

# Fig. 3